Europäisches Patentamt

European Patent Office

Office européen des brevets

(19)

(11) Veröffentlichungsnummer: **0 131 735**

**A1**

(12) **EUROPÄISCHE PATENTANMELDUNG**

(21) Anmeldenummer: 84106476.9

(22) Anmeldetag: 06.06.84

(51) Int. Cl.⁴: **A 01 N 25/04**
**A 01 N 57/16, A 01 N 57/12**

(30) Priorität: 16.06.83 US 505104

(43) Veröffentlichungstag der Anmeldung:
23.01.85 Patentblatt 85/4

(84) Benannte Vertragsstaaten:
DE FR GB NL

(71) Anmelder: Deutsche ITT Industries GmbH
Hans-Bunte-Strasse 19 Postfach 840
D-7800 Freiburg(DE)

(84) Benannte Vertragsstaaten:
DE

(71) Anmelder: ITT INDUSTRIES INC.
320 Park Avenue
New York, NY 10022(US)

(84) Benannte Vertragsstaaten:
FR GB NL

(72) Erfinder: Viets, Alan Kelvin
3607 Portage Avenue
Madison Wisconsin 53704(US)

(74) Vertreter: Morstadt, Volker, Dipl.-Ing.
c/o Deutsche ITT Industries GmbH Patent/lizenzabteilung
Postfach 840 Hans-Bunte-Strasse 19
D-7800 Freiburg/Brsg.(DE)

(54) Insektizides Gemisch.

(57) Insektizides Gemisch hoher Hydrolysebeständigkeit, das als Wirkstoff eine Organophosphorverbindung, ein Tensid in Form eines nichtionischen Sorbitanabkömmlings, ferner ein organisches Lösungsmittel sowie als Auffüllmenge Wasser enthält.

EP 0 131 735 A1

Croydon Printing Company Ltd

Insektizides Gemisch

Die Priorität der Anmeldung Nr. 505 104 vom 16. Juni 1983 in den Vereinigten Staaten von Amerika wird beansprucht.

Die vorliegende Erfindung betrifft insektizide Gemische auf Wasserbasis mit einem hohen Grad hydrolytischer Stabilität sowie ein Verfahren zu deren Herstellung.

Malathion ist der Handelsname eines organischen Dithiophosphat-Insektizides mit der chemischen Bezeichnung S-(1,2-Dicarbäthoxyäthyl)-O.O-dimethyldithiophosphat. Es ist ein gegenwärtig in der ganzen Welt weit verbreitetes Insektizid, das grundsätzlich in Form eines emulgierbaren Konzentrates Verwendung findet, nämlich in einer Dispersion von Malathion in einer beträchtlichen Menge an Petroleum unter dem Zusatz eines emulgierenden Mittels, das die Dispersion in Wasser unterstützt. Malathion ist bekannt dafür, daß es sehr rasch in Gegenwart von Wasser sowohl im sauren wie im alkalischen Bereich hydrolysiert. Die Art des emulgierenden Mittels und die Mengenverhältnisse an den Bestandteilen in dem emulgierbaren Konzentrat sind dergestalt, daß die Anwesenheit auch von einer kleinen Menge Wasser zum Abbau des Malathions innerhalb von einigen Tagen führt. Dies verhindert die Anwendung des Insektizides in Verbindung mit Sprühvorrichtungen, angebracht an einem Schlauchende, in denen Wasser die Haltbarkeit des Konzentrates zerstören würde. Darüberhinaus wäre es wirtschaftlich wünschenswert, den in den emulgierbaren Konzentraten erforderlichen Anteil an organischen Lösungsmitteln zu reduzieren. Versuche zur Herstellung wässriger Dispersionen von Malathion wurden mit nur teilweisem Erfolg durchgeführt. Die US-PS 43 03 640

A.K. Viets 3                                    R 101 EP

offenbart z.B. eine wässrige Malathionmischung, die
Polyvinylalkohol und einen Eindicker enthält. Die chemische Stabilität oder Haltbarkeit dieser Mischung liegt
jedoch noch unter der für eine insektizide Mischung als
notwendig angesehenen.

Hier will die Erfindung Abhilfe schaffen. Die Erfindung,
wie sie in den Ansprüchen gekennzeichnet ist, löst die
Aufgabe, eine auf Wasser basierende Mischung eines Insektizides vom Typ Organophosphorverbindung anzugeben, die
eine hohe Hydrolysebeständigkeit aufweist sowie ferner
eine Mischung eines derartigen Insektizides anzugeben,
das wesentlich verringerte Mengen an organischen Lösungsmitteln erfordert.

Es hat sich gezeigt, daß flüssige Mischungen derartiger
Insektizide herstellbar sind, die Wasser enthalten und
trotzdem hydrolysebständig sind. Die Emulsionen nach der
Erfindung enthalten ein Insektizid vom Typ Organophosphorverbindung, 3 bis 20 Gew.% eines Tensides auf der
Basis eines nichtionischen Sorbitans, 5 bis 65 Gew.% eines
organischen Lösungsmittels und eine Restprozentmenge an
Wasser in einer Höhe von mindestens 10Gew.%. Die Emulsionen werden durch Vermischen von Insektizid, Tensid
und Lösungsmittel und anschließender Zugabe von Wasser
hergestellt. Die Emulsionen haben sich als mindestens
so stabil, in manchen Fällen sogar stabiler als die
gegenwärtig zugänglichen Mischungen von emulgierbaren
Konzentraten an Malathion erwiesen.

Man kann annehmen, daß das Tensid und das Lösungsmittel
eine Barriere an der Grenzfläche zwischen den Pestizidmizellen und dem Wasser darstellen. Diese Barriere ist offensichtlich stark genug, um einen Wasserangriff auf das
Insektizid zu verhindern. Testergebnisse stützen diese

A.K. Viets 3                                    R 101 EP

Anschauung. Jedesmal, wenn das Lösungsmittel aus der Mischung entfernt wurde, zeigte sich eine geringere Stabilität der Mischungen. Ohne Anwesenheit von Tensid läßt sich das Pestizid und das Lösungsmittel mit Wasser nicht vermischen.

In bevorzugten Mischungen kann eine geringe Menge an sehr fein verteiltem Siliciumdioxid zur Erhöhung der Mischungsviskosität zugefügt werden. Die Menge desselben liegt normalerweise bei 0,1 bis 2 Gew.%. Bei Mischungen mit verhältnismäßig hohem Anteil an Insektizid (z.B. über 40Gew.%) beginnt sich die Mischung beim Absetzenlassen nach wenigen Stunden zu trennen. Wenn sich die Grenzflächen der Mizellen ausdehnen, verlieren Tensid und Lösungsmittel etwas an ihrer Barrierewirkung gegen das Wasser.

Die Erfindung wird nun anhand einiger praktischer Beispiele näher erläutert. Sofern nicht anders angegeben, beziehen sich alle Teilangaben und Prozentwerte auf das Gewicht.

Beispiele 1 und 2
Malathionemulsionen wurden aus den folgenden Mischungen hergestellt:

|                          | Beispiel 1 | Beispiel 2 |
|--------------------------|------------|------------|
| Malathion                | 13.18      | 52.75      |
| Sorbitanmonooleat        | 10.00      |            |
| Sorbitanmonooleat POE 20 |            | 5.00       |
| Aromatisches LM          | 27.08      | 10.00      |
| $SiO_2$                  |            | .85        |
| Wasser                   | 49.74      | 31.40      |

A.K. Viets 3                                    R 101 EP

Das in diesem und in den folgenden Beispielen verwendete
Malathion war ein technisches Produkt mit einem Gehalt
an Malathion von 91 Gew.%. Das Sorbitanmonooleat war
ein käufliches Tensid, das unter dem Handelsnamen Span 80
läuft. Das Sorbitanmonooleat POE 20 war ein Tensid, das
unter der Bezeichnung Tween 80 im Handel ist. Das
Siliciumdioxid war ein fein zerteiltes Oxid, käuflich
unter dem Namen Cabosil M-5. Die Mischungen wurden so
hergestellt, daß man Malathion, Tensid, Lösungsmittel
und SiO$_2$ (Beispiel 2) vereinigte und bis zur Ausbildung
einer einheitlichen Lösung vermischte. Unter Rühren wurde
dann das Wasser langsam der Lösung zugefügt. Die chemische
Stabilität dieser Mischungen wurde bestimmt, in dem man sie
in Glasflaschen zum Zwecke von beschleunigten Haltbarkeitsstudien in einem Ofen von 50°C unterbrachte. Nach
15 Wochen enthielt die Emulsion nach Beispiel 1 über
93% und die nach Beispiel 2 über 89% des ursprünglich eingebrachten Malathions.

Beispiele 3 und 4
Um die Haltbarkeit der Mischungen nach der Erfindung
mit der anderer Malathionmischungen zu vergleichen,
wurden beschleunigte Haltbarkeitsstudien  an Malathionemulsionen durchgeführt, wie sie aus der oben genannten
US-Patentschrift bekannt sind. Die Mischungen waren wie
folgt zusammengesetzt:

|  | %  | |
| --- | --- | --- |
|  | Beispiel 3 | Beispiel 4 |
| Malathion | 40 | 10 |
| 10% wässrige Lsg. von Polyvinylalkohol | 50 | 40 |
| 8% wässrige Lsg. von Eindicker | 10 |  |
| 28% wässrige Lsg. von Eindicker |  | 50 |

A.K. Viets 3                                    R 101 EP

Der Polyvinylalkohol war der unter dem Namen Vinol 205 im Handel befindliche. Der Eindicker im Beispiel 3 war Celluloskleber, bekannt unter dem Handelsnamen 7 MXF und der aus Beispiel 4 eine neutralisierte Lösung von Acrylemulsion, käuflich unter der Bezeichnung ASE60. Die Mischungen wurden durch gründliches Rühren des Malathions und des Polyvinylalkohols bei Raumtemperatur, Zugabe des Eindickers und Weiterrühren bis zu einer homogenen Emulsion hergestellt. Diese Mischungen wurden in Glasflaschen in einem Ofen bei 50°C gehalten. Nach 5 Wochen enthielt die Emulsion nach Beispiel 3 noch 74,4% und die nach Beispiel 4 noch 63,9% des ursprünglich eingesetzten Malathions. Da diese Ergebnisse nach 5 Wochen merklich unter denen nach 15 Wochen nach der Erfindung lagen, wurden keine weiteren Haltbarkeitsversuche durchgeführt. Als Vergleich wurden entsprechende Haltbarkeitsstudien mit einem herkömmlichen 50%igen emulgierbaren Konzentrat an Malathion vorgenommen, wobei überhaupt kein Wasser in der Mischung vorlag. Nach 15 Wochen enthielt die Mischung noch 80% des ursprünglichen Malathiongehalts.

Beispiele 5 bis 7

Die folgenden zusätzlichen Malathionmischungen wurden hergestellt:

|  | % | | |
| --- | --- | --- | --- |
|  | Beisp. 5 | Beisp.6 | Beisp.7 |
| Malathion | 13.18 | 52.75 | 52.75 |
| Sorbitanmonooleat | 10.00 | | |
| Sorbitanmonopalmitat POE 20 | | 5.00 | |
| Sorbitanmonostearat POE 20 | | | 5.00 |
| aromat.Lösungsmittel | 38.41 | 10.00 | 10.00 |
| $SiO_2$ | | 0.85 | 0.85 |
| Wasser | 38.41 | 31.40 | 31.40 |

Das Sorbitanmonopalmitat POE 20 und Monostearat POE 20
waren käufliche Tenside, die unter den Bezeichnungen
Tween 40 und Twenn 60 im Handel sind. Nach 15 Wochen
betrug der Gehalt an Malathion im Beispiel 5 noch
100%, im Beispiel 6 92% und im Beispiel 7 94% der ursprünglich eingesetzten Menge.

Beispiel 8
In der folgenden Mischung wurde Phosalone (O.O-Diäthyl-
S-(6-chlor-2-oxobenzoxazol-3-yl)-dithiophosphat als
Insektizid eingesetzt:

| | |
|---|---|
| Phosalone | 44.68% |
| Xylol | 20.00 |
| Sorbitan-monooleat POE20 | 5.00 |
| SiO$_2$ | 0.85 |
| Wasser | 29.47 |

Phosalone, organisches Lösungsmittel, Tensid(Tween 80)
und Eindicker (Cabosil M-5) wurden vermischt und das
Wasser unter fortwährendem Rühren langsam zugefügt.
Beschleunigte Haltbarkeitsstudien zeigten im wesentlichen
keinen Verlust an Phosalone  nach 5 und 10 Wochen. Am
Ende von 15 Wochen lagen noch 99,8% des ursprünglich
eingesetzten Phosalones vor.

Die bei der praktischen Anwendung der Erfindung geeigneten Insektizide sind wasserunlösliche Organophosphorverbindungen, für die Malathion und Phosalone
beispielgebend sind. Ein weiteres Insektizid, das ausgezeichnete Stabilität in einer Mischung nach der Erfindung
zeigt, ist Chlorpyrifos. Malathion, Phosalone und Chlorpyrifos sind sämtlich organische Thiophosphatester mit
hydrolisierbaren O-P oder P-S Bindungen. Die chemischen
Bezeichnungen lauten dabei für Malathion S-(1,2-Dicarbäthoxy- äthyl)-OO-dimethyl-dithiophosphat, für Phosalone O,O-Diäthyl-S-(6-chlor-2-axobenzoxazol-3-yl)-dithiophosphat und für Chlorpyrifos O,O-Diäthyl-O-(3,5,6-trichlor-2-pyridyl)dithiophosphat. Der Anteil der Insektizide beträgt im allgemeinen 20 bis 80 Gew.% der Gesamtmischung.

Geeignete Tenside sind nichtionische Fettsäureester von Sorbitan, die ggf. äthoxyliert sein können. Äthoxylierte Tenside müssen oft zur Herstellung von inverten Emulsionen (Öl in Wasser) herhalten, wohingegen unäthoxylierte Tenside üblicherweise Wasser-in-Öl-Emulsionen erzeugen. Käufliche Tensidmischungen mit den folgenden Bestandteilen wurden getestet und als brauchbar befunden: Sorbitanmonooleat, Sorbitanmonooleat POE 20 (20 Mole Oxyäthylen), Sorbitanmonopalmitat, Sorbitanmonopalmitat POE 20, Sorbitanmonolaureat, Sorbitanmonolaureat POE 20, Sorbitanmonostearat, Sorbitanmonostearat POE 20, Sorbitantrioleat, Sorbitantrioleat POE 20, Sorbitantristearat und Sorbitantristearat POE 20. Die Tenside sollten in Mengen zwischen 3 und 20 Gew.% der Mischung, vorzugsweise 5 bis 15 Gew.% eingesetzt werden.

Das organische Lösungsmittel ist ein Lösungsmittel, in dem sich das Insektizid löst, und es ist üblicherweise ein aromatisches Erdöldestillat, z.B. schweres aromatisches Naphta. Das Lösungsmittel kann in Mengen von 5 bis 65Gew.% vorliegen, die übliche Menge übersteigt jedoch 50 Gew.% nicht. Im Falle von Malathion ist die Mindestmenge an Lösungsmittel 10 Gew.%. Mengen über 65% können verwendet werden, sind jedoch überflüssig, und es liegt auf der Hand, daß das Bestreben dahin geht, die Wassermenge zu erhöhen und die des anorganischen Lösungsmittel zu verringern. Die Auffüllung auf 100 erfolgt mit Wasser, das in einer Menge von nur 10 Gew.%, im wesentlichen aber mehr als 15 Gew.% vorliegt.

A.K. Viets 3

R 101 EP
25. Mai 1984
Dr.Rl/bk

Patentansprüche

1. Insektizides Gemisch hoher Hydrolysebeständigkeit,
   gekennzeichnet durch:
   - eine insektizide Organophosphorverbindung,
   - 3 bis 20 Gew.% eines nichtionischen Tensides auf
     der Basis Sorbitan,
   - 5 bis 65 Gew.% eines organischen Lösungsmittels, und
   - eine Restmenge Wasser in der Höhe von mindestens
     10 Gew.%.

2. Insektizides Gemisch nach Anspruch 1, gekennzeichnet
   durch einen Gehalt an fein zerkleinertem Siliciumdioxid.

3. Insektizides Gemisch nach den Ansprüchen 1 oder 2,
   dadurch gekennzeichnet, daß das Insektizid Malathion,
   Phosalone oder Chlorpyrifos ist.

4. Insektizides Gemisch nach einem der Ansprüche 1 bis 3,
   dadurch gekennzeichnet, daß das Tensid ein ggf. äthoxylierter Fettsäureester von Sorbitan ist und in der
   Menge von 5 bis 15 Gew.% vorliegt.

5. Insektizides Gemisch nach einem der Ansprüche 1 bis 4,
   gekennzeichnet durch eine unter 50 Gew.% liegende
   Lösungsmittelmenge und eine über 15 Gew.% liegende
   Wassermenge.

6. Verfahren zur Herstellung eines insektiziden Gemisches
   nach Anspruch 1, dadurch gekennzeichnet, daß das
   Insektizid mit dem Tensid und dem organischen Lösungsmittel vermischt und dem Gemisch die Auffüllmenge
   Wasser zugefügt wird.

0131735

7. Verfahren nach Anspruch 6, dadurch gekennzeichnet,
   daß das fein zerkleinerte Siliciumdioxid der
   Mischung vor der Zugabe von Wasser zugefügt wird.

### Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 048 675 (SHELL)<br>* Seite 1, Zeilen 54-76; Seite 2, Zeilen 32-104; Seite 3, Zeilen 34-38,60-78; Beispiel 1; Patentansprüche * | 1,3-6 | A 01 N 25/04<br>A 01 N 57/16<br>A 01 N 57/12 |

-----

**RECHERCHIERTE SACHGEBIETE (Int. Cl. ³)**

A 01 N

Der vorliegende Recherchenbericht wurde für alle Patentansprüche erstellt.

| Recherchenort | Abschlußdatum der Recherche | Prüfer |
|---|---|---|
| DEN HAAG | 28-09-1984 | FLETCHER A.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82